# EUROPEAN PATENT SPECIFICATION

(11) **EP 1 939 226 B1**
(45) Date of publication and mention of the grant of the patent: **17.07.2013**
(21) Application number: 06026992.5
(22) Date of filing: 28.12.2006
(51) Int. Cl.: C08F 4/649, C08F 4/659, C08F 10/00

(54) **Process for producing a polymer, a process for producing a prepolymerized catalyst, such prepolymerized catalyst and its use**
Verfahren zur Polymerherstellung, Verfahren zur Herstellung eines prepolymerisierten Katalysators, prepolymerisierter Katalysator und seine Verwendung
Procédé de production d'un polymère, procédé de production d'un catalyseur prépolymérisé, catalyseur prépolymérisé de ce type et son usage

(43) Date of publication of application: 02.07.2008
(73) Proprietor: Borealis Technology Oy, 06101 Porvoo (FI)
(72) Inventor: Ernst, Eberhard, 4210 Unterweitersdorf (AT); Paulik, Christian, 4030 Linz (AT); Lehmus, Petri, 00850 Helsinki (FI); Tuominen, Olli, 00930 Helsinki (FI)
(74) Representative: Prins, Hendrik Willem

(56) References cited:
- EP-A- 0 566 349
- WO-A-2005/005495

## Description

The present invention relates to a process for producing a polymer, to a process for producing a prepolymerized catalyst, to such prepolymerized catalyst, and to the use of such prepolymerized catalyst.

### I. Background of the invention

WO 2005/005495 discloses a process for polymerizing alpha-olefins. In this process alpha-olefins are contacted in a loop reactor with a metallocene-based catalyst. This prepolymerized catalyst is subsequently used in a polymerization reactor for polymerizing the same or different alpha-olefins. This prepolymerized catalyst is used in order to avoid fouling problems occurring when polymer particles adhere to the walls and mechanical parts of a polymerization reactor.

Reportedly it is thought that this prepolymerization treatment reduces fouling by preventing early fracture of the catalyst particles. Early fracture produces fine particles which may adhere to reactor walls. Furthermore, a protective shell is formed reducing dissociation from catalyst components which might migrate to the reactor surface and initiate polymer build-up. Finally, prepolymerization reduces early catalyst activity thereby avoiding overheating. Exemplified is a propylene polymerization procedure in which a metallocene catalyst, treated with MAO, is subjected to a prepolymerization with propylene in a loop reactor at a residence time of about 8 minutes and at a prepolymerization temperature in the range of 30-50°C. The prepolymerized catalyst comprises 78-145 g polymer/g catalyst.

The present invention has for its object to improve alpha-olefin polymerization using an improved prepolymerized catalyst. This prepolymerized catalyst is provided with a polymer which is not sticky such that the catalyst particles will not cause reactor fouling by plugging and polymer agglomerate formation. Furthermore, in relation to metallocene-based catalysts dissociation of catalyst components, such as alumoxanes is further reduced. In addition fracture of catalyst particles and the formation of catalyst fines is further reduced.

It is noted that in the prepolymerized catalyst most active catalytic sites start the polymerisation in mild conditions thereby reducing over-reactivity of the catalyst.

### II. Summary of the invention

In view of the above mentioned drawbacks in relation to the state of the art and the objectives according to the present invention is provided a a process for producing a polymer based on alpha-olefins. This polymer may be a homopolymer or copolymer based on two or more monomers. According to the invention, a step of prepolymerising a catalyst with at least one alpha-olefin monomer in a continuously operating reactor as claimed in claim 1 is part of said process.

### III. Detailed disclosure of the invention

### III.a. Prepolymerization process

The prepolymerization process comprises the prepolymerization of the catalyst with at least one alpha-olefin monomer. The prepolymerization is carried out such that the prepolymerized catalyst produced comprises 200-400 g polyolefin/g catalyst. The polyolefin present on the catalyst has a weight average molecular weight within the range of 50,000 g/mol to 150,000 g/mol.

The amount of polyolefin present on the catalyst particles and the weight average molecular weight of the polyolefin are selected such that the prepolymerized catalyst particles are substantially not sticky and the dissociation of catalyst components is substantially reduced. The upper limit (400 g/g catalyst) for the amount of polyolefin/g catalyst is selected such that optimum benefit is obtained with such a prepolymerized catalyst in the subsequent polymerization reaction. Accordingly, the prepolymerized catalyst comprises 200-400 g polyolefin/g catalyst. The upper limit for the weight average molecular weight of the polyolefin prepolymerized on the catalyst particle is primarily depended on the lower limit of the weight average molecular weight of the polymer subsequently produced in the polymerization. Accordingly, the weight average molecular weight of the polyolefin on the catalyst particle is within the range of 50,000-150,000 g/mol.

Weight average molecular weight (Mw), and optionally number average molecular weight (Mn) and thus molecular weight distribution (MWD = Mw/Mn), was determined by size exclusion chromatography (SEC) based on standard test methods ISO 16014-2:2003 and ISO 16014-4:2003.

The molecular weight averages and molecular weight distribution were measured on a Waters Alliance GPCV2000 SEC instrument with on-line viscometer at 140 degrees Celsius using 1,2,4-trichlorobenzene (TCB) stabilized with 2,6-di-tert-butyl-4-methylphenol (BHT) as an eluent. A set of two mixed beds and one 107 Å TSK-Gel columns from TosoHaas was used and the system was calibrated with NMWD polystyrene standards (from Polymer laboratories).

In the prepolymerization less than about 10 weight % of the total amount of the polymer is to be formed on the catalyst particle. Such a limitation of the amount of the polyolefin on the catalyst particle is preferably not more than 5 weight %. This provides optimal properties for the melt flow rate, the weight average molecular weight distribution and reduces the occurrence of odour and results in improvement of taste in the ultimately produced polymer.

The prepolymerization is preferably carried out in a continuously operating reactor at an average residence time of more than 30 minutes up to 90 minutes. A relatively long residence time allows a relatively long time for forming the polyolefin on the catalyst particle which is better for the morphology and results in less heat formation and an improvement of the strength of the catalyst particle.

Finally, at such relatively long average residence times the proportion of catalyst particles that were only shortly in the reactor and have a too low amount of polyolefin is very low. Accordingly, a substantial fraction of all produced prepolymerized catalyst particles will have the desired properties. Practically the residence time may be within the range of 31-60 minutes, or 35-60 minutes, such as 35-50 minutes.

The temperature at which the prepolymerization is carried out is within the range of 25-70°C. This temperature is selected such that the prepolymerization reaction is taking place at a relatively low polymerization rate such that a relatively small amount of polyolefin is formed on the catalyst particles. In this respect it is noted that the catalyst subjected to the prepolymerization may comprise very active catalytic sites at which the polymerization reaction is preferably taking place with the generation of (exothermic) reaction heat. Thus, starting the prepolymerization at relatively low prepolymerization temperatures will reduce the polymerization rate and the generation of reaction heat. This is important for reasons that the catalyst particles subjected to the prepolymerization reaction are relatively small due to the absence of any polymer on its surface and therefore will have a small heat transfer surface. Accordingly heat transfer is relatively low but will improve with the increase of the size of the prepolymerized catalyst particle. Accordingly, it is preferred that the prepolymerization is carried out at about 35-60°C. If the prepolymerization is conducted in several steps it is most preferred that the temperature in the later prepolymerization steps is increasing after the first part of the prepolymerization reaction.

The prepolymerization may be carried out in any type of polymerization reactor. Suitable reactors are continuous stirred tank reactors and a loop reactor. A comparted reactor or a cascade of two or more reactors may be used. Comparted reactors are disclosed in EP 886,655.

Although the prepolymerization may be carried out in a slurry polymerization or a gas phase polymerization, it is preferred to carry out the prepolymerization as a slurry polymerization.

When the prepolymerization is carried out in at least two steps, or in at least two reactors or in two compartments of a comparted reactor, then it is preferred to increase the temperature of the prepolymerization in the successive polymerization steps, and/or in the successive reactors and/or in the successive reactors compartments.

### III.b. Prepolymerization catalyst

The catalyst to be subjected to the prepolymerization may be any metallocene catalyst suitable for producing polyolefins.

### Metallocene-based catalyst

Metallocene-based catalysts comprise active sites having a 5-ring directly attached to a transition metal, η bonded. For example, a metallocene-based catalyst comprises generally compounds represented by the formula LₘRₙMXq wherein M is a transition metal of group 3 to 10 of the periodic table (IUPAC), or of an actinide or lantanide, each X is independently a monovalent anionic ligand, such as σ-ligand, each L is independently an organic ligand which coordinates to M, R is a bridging group linking two ligands L, m is 1, 2 or 3, n is 0 or 1, q is 1,2 or 3, and the sum of m+q is equal to the valency of the metal. Furthermore, ligands X can be mutually bridged and ligand X can be bridged with ligand L.

Where a metallocene catalyst is used, the preparation of the metallocenes can be carried out according or analogously to the methods known from the literature and is within skills of a person skilled in the field. Thus for the preparation see e.g. EP-A-129,368, examples of compounds wherein the metal atom bears a -NR" 2 ligand see i.a. in WO-A-98/56831 and WO-A-00/34341. For the preparation see also e.g. in EP-A-260,130, WO-A-97/28170, WO-A-98/46616, WO-A-98/49208, WO-A-99/12981, WO-A-99/19335, WO-A -98/56831, WO-A-00/34341, EP-A-423,101 and EP-A-537,130.

Examples of suitable metallocenes are,
Dimethylsilylbis (2-methyl-4-phenyl-1-indenyl)ZrCl₂;
Dimethylsilylbis (2-methyl-4,6-diisopropylindenyl)ZrCl₂;
Dimethylsilylbis (2-ethyl-4-phenyl-1-indenyl)ZrCl₂;
Dimethylsilylbis (2-ethyl-4-naphthyl-1-indenyl)ZrCl₂;
Phenyl(Methyl)silylbis(2-methyl-4-phenyl-1-indenyl)ZrCl₂;
Dimethylsilylbis(2-methyl-4-(1-naphthyl)-1-indenyl)ZrCl₂;
Dimethylsilylbis(2-methyl-4-(2-naphthyl)-1-indenyl) ZrCl₂;
Dimethylsilylbis(2-methyl-indenyl)ZrCl₂;
Dimethylsilylbis(2-methyl-4,5-diisopropyl-1-indenyl) ZrCl₂;
Dimethylsilylbis(2,4,6-trimethyl-1-indenyl)ZrCl₂;
Phenyl(Methyl)silylbis(2-methyl-4,6-diisopropyl-1-indenyl)ZrCl₂;
1,2-Ethandiylbis(2-methyl-4,6-diisopropyl-1-indenyl) ZrCl₂;
1,2-Butandiylbis(2-methyl-4,6-diisopropyl-1-indenyl) Dimethylsilylbis(2-methyl-4-ethyl-1-indenyl)ZrCl₂;
Dimethylsilylbis(2-methyl-4-isopropyl-1-indenyl)ZrCl₂; Dimethylsilylbis(2-methyl-4-t-butyl-1-indenyl)ZrCl₂; Phenyl(Methyl)silylbis(2-methyl-4-isopropyl-1-indenyl) ZrCl₂; Dimethylsilylbis(2-ethyl-4-methyl-1-indenyl)ZrCl₂; Dimethylsilylbis(2,4-dimethyl-1-indenyl)ZrCl₂; Dimethylsilylbis(2-methyl-4-ethyl-1-indenyl)ZrCl₂; Dimethylsilylbis(2-methyl-1-indenyl)ZrCl₂; Dimethylsilyl[(2-methyl-(4'-tert.butyl)-4-phenyl-indenyl)(2-isopropyl-(4'-tert.butyl)- 4-phenyl-indenyl)]zirconium dichloride.

Metallocenes are generally used in combination with some form of activator. Alkylalumoxanes may be used as activators, most desirably methylalumoxane (MAO).

Activators may also include those comprising or capable of forming non-coordinating anions along with catalytically active metallocene cations. Compounds or complexes of fluoro aryl-substituted boron and aluminium are particularly suitable, see, e.g., US patents 5,198,401; 5,278,119; and 5,643,847.

The metallocene-based catalyst may be supported using a porous particulate material, such as for example, clay, talc, inorganic oxides, inorganic chlorides and resinous materials such as polyolefin or polymeric compounds.

Desirably, the support materials are porous inorganic oxide materials. Silica, alumina, silica-alumina, and mixtures thereof are particularly desirable. Other inorganic oxides that may be employed either alone or in combination with the silica, alumina or silica-alumina are magnesia, titania and zirconia. A particularly desirable support material is particulate silicon dioxide.

The supported metallocene-based catalyst may be used directly in polymerization or the catalyst composition may be prepolymerized using methods well known in the art. For details regarding prepolymerization, see U.S. Patent Nos. 4,923,833; 4,921,825; and 5,643,847; and EP 279,863 and EP 345,893.

In relation to the metallocene based catalyst it is noted that due to the prepolymerization reaction the polyolefin load will be substantially increased due to the longer residence time in view of the relatively low reaction rate.

### III.c. Prepolymerization

The polymer for the prepolymerized catalyst may be produced using at least one alpha-olefin, such as any known olefin monomer used in polymerization and copolymerization, such as C₂-C₂₀ alpha-olefins. Preferably C₂₋₁₀ olefins, such as ethylene, propylene, 1-butene, 1-pentene, 1-hexene, 4-methyl-1-pentene, 1-heptene, 1-octene, 1-nonene and 1-decene as well as mixtures thereof. Most preferred are ethylene and propylene with propylene especially preferred.

The prepolymerization may be carried out in the presence of a diluent. Suitable diluents are C₃ to C₁₀-hydrocarbons. The amount of diluent may be adjusted according to particular needs but is usually not exceeding 90 weight % of the total amount of diluent and monomers. In many cases the use of a diluent is not necessary. Preferably the prepolymerization is conducted in liquid propylene without an inert diluent. Normally propylene contains a small fraction, typically below 10 % by weight and preferably below 5 % by weight, of aliphatic hydrocarbons, such as propane, ethane and butane as impurities. However, in the context of the present patent application these impurities should not be understood as inert diluents.

Additives may be added. Suitable additives comprise anti-static agents. As mentioned above additives, such as poison scavengers, may be used as well.

Hydrogen may be added in order to activate the catalyst system and in order to control the weight average molecular weight of the polyolefin produced during the prepolymerization.

The catalyst may be transferred into the prepolymerization reactor by any means known in the art. It is thus possible to suspend the catalyst in a diluent and maintain it as homogeneous slurry. Especially preferred it is to use oil having a viscosity form 20 to 1500 mPa-s as diluent, as disclosed in WO-A-2006/063771. It is also possible to mix the catalyst with a viscous mixture of grease and oil and feed the resultant paste into the prepolymerization reactor. Further still, it is possible to let the catalyst settle and introduce portions of thus obtained catalyst mud into the prepolymerization reactor in a manner disclosed, for instance, in EP 428,054.

If the prepolymerization is conducted as a slurry polymerization, any suitable reactor type known in the art may be used. A continuous stirred tank reactor and a loop reactor are suitable examples of useful reactor types. Especially, a loop reactor is preferred because of its flexibility.

The slurry prepolymerization may be conducted in normal liquid conditions or alternatively so that the temperature and the pressure within the reactor exceed the critical temperature and pressure of the fluid mixture within the reactor. Such a polymerization method is called supercritical slurry polymerization. Description of liquid slurry polymerization is given, among others, in US 3,262,922.

In a loop reactor the slurry comprising the monomer(s) and the growing polymer particles including the catalyst fragmented therein is circulated along a closed pipe by means of a pump. The velocity of the fluid is maintained at a level which is sufficient to keep the particles from settling within the reactor. The pipe is jacketed and a heat transfer medium is circulated in the jacket to maintain the temperature within the loop reactor constant. There are connections for introducing the reactants, such as monomer, eventual comonomers and hydrogen, as well as the catalyst components into the reactor. Further, there is at least one connection for withdrawing the polymer slurry from the reactor.

The pressure in the prepolymerization reactor is generally selected such that the pressure is higher than or equal to the pressure in the subsequent polymerization. Accordingly, the pressure is generally selected in between the range from about 2.10⁶ -8.10⁶ Pa (20-80 bar). The pressure is selected such that the fluid contained in the reactor, preferably loop reactor remains either in liquid or supercritical state at the operating temperature.

A small amount of comonomer (ethylene and/or a C₄-C₁₀ alpha-olefin) may be introduced. The amount of comonomer is less than 5 weight % in order to avoid the occurrence of sticky particles which are caused by the reduced crystallinity of the prepolymer in the prepolymerized catalyst particles.

The reactants, catalyst, alpha-olefin monomer, comonomer and additives, may be introduced in the prepolymerization reaction or reactor continuously or intermittently. Continuous addition is preferred to improve process stability. The prepolymerized catalyst may be withdrawn from the prepolymerization reaction or reactor either continuously or intermittently. Again a continuous withdrawal is preferred.

It is noted that the reactants are to be free from catalyst poisons such as oxygen, moisture and oxygen containing or sulphur containing compounds. The catalyst poisons may be removed by treatment of the reactants in a known manner with molecular sieves and metal oxide catalysts.

### III.d. Polymerization

The polymerization may be carried out using the same, different or a mixture of alpha-olefins used in the prepolymerization. Polymers, in particular multimodal polymers, may be prepared, for example, by two or more stage polymerisation or by the use of two or more different polymerisation catalysts and/or by the use of different polymerisation conditions in a one stage polymerisation. In principle any polymerisation method including solution, slurry and gas phase polymerisation can be used for producing polymers using the prepolymerized catalyst. The temperature in the polymerisation reactor needs to be sufficiently high to reach an acceptable activity of the catalyst. On the other hand, the temperature should not exceed the softening temperature of the polymer.

Preferably, however, the polymers are produced in a two or three stage polymerisation. Suitable polymerisation processes include liquid phase polymerisation, e.g. solution or slurry polymerization, preferably in slurry polymerisation in liquid monomer, or gas phase polymerisation. Preferably the polymerisation involves at least one slurry polymerisation (e.g. in a loop reactor).

The polymers may comprise a low molecular weight (LMW)component and a high molecular weight (HMW) component.

In one preferable embodiment one of the above mentioned LMW and HMW components is polymerised as a slurry polymerisation (e.g. in a slurry tank or loop reactor) and the other as a gas phase polymerisation (e.g. in a gas reactor), in any order.

The polymers using the prepolymerized catalyst of the present invention are preferably produced in such a reactor system. Particularly preferably the polymer is formed at least in a two stage process comprising a slurry loop polymerisation followed by a gas phase polymerization. A preferred loop reactor-gas phase reactor system usable in this invention is generally known as BORSTAL® reactor system. The multistage polymerization is preferably carried out using the same metallocene catalyst system in each stage. Moreover, at least one propylene polymer is preferably polymerised in the slurry reactor, preferably in a loop reactor, and another propylene polymer in the gas phase reactor in the presence of the reaction product of the slurry reactor.

The conditions used in such processes are well known. For slurry reactors, the reaction temperature will generally be in the range 60 to 110 °C (e.g. 85-110 °C), the reactor pressure will generally be in the range 5.10⁵ -8.10⁶ Pa (5 to 80 bar) preferably 5.10⁶-6,5.10⁶ (50-65 bar), and the residence time will generally be in the range 0.3 to 5 hours (e.g. 0.5 to 2 hours).Preferably the polymerisation is then conducted in liquid monomer. Preferably a separate inert diluent is not used, but if used it will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.

If gas phase reactions are employed then conditions are preferably as follows:
- the temperature is within the range of 50°C to 130°C, preferably between 60°C and 115°C and more preferably between 65°C and 90°C,
- the pressure is within the range of 1.10⁶ Pa to 6.10⁶ Pa(10 bar to 60 bar), preferably between 1.10⁶ Pa to 4.10⁶ Pa (10 bar to 40 bar),
- hydrogen can be added for controlling the molar mass in a manner known per se,
- the residence time is typically 1 to 8 hours.

The gas used will commonly be a non-reactive gas such as nitrogen or low boiling point hydrocarbons such as propane together with monomer (e.g. propylene) and eventual comonomers (e.g. ethylene and/or 1-butene). If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Preferably, one propylene polymer, which may be a propylene homopolymer or a copolymer of propylene and another alpha-olefin, like ethylene or an alpha-olefin having 4 to 10 carbon atoms, is produced in a continuously operating loop reactor where propylene is polymerised, optionally together with other alpha-olefins, in the presence of a polymerisation catalyst as stated below and a chain transfer agent such as hydrogen.

The other propylene polymer can then be formed in a gas phase reactor, preferably using the same catalyst.

According to one preferred embodiment of the invention the polymer slurry withdrawn from the loop reactor is directly introduced into a gas phase reactor, without a flash step between the reactors. Such a process is disclosed in WO-A-98/58975, WO-A-98/58976 and WO-A-98/58977.

The polymer produced by the process of the invention may be unimodal or multimodal. Unimodal polymers have a relatively narrow molecular weight distribution with a polydispersity index, defined as Mw/Mn, being lower than 4 and preferably lower than 3, and typically close to 2. Multimodal polymers have a polydispersity index of more than 4 and they comprise at least a low molecular weight component and a high molecular weight component. Preferably, the high molecular weight component also has a higher content of comonomer than the low molecular weight component.

The term "copolymer" as used herein is intended to encompass polymers comprising repeat units deriving from one monomer and at least one other monomer. In typical copolymers at least 0.25 mol-%, preferably at least 0.5 mol-%, e.g. at least 1-mol%, such as up to 10 mol-% of repeat units derive from the comonomer. In contrast the term "homopolymer" as used herein is intended to encompass polymers which consist essentially of repeat units deriving from one monomer. Homopolymers may, for example, comprise at least 99.8 %, preferably at least 99.9 %, by weight of repeat units deriving from the monomer.

It is also possible to conduct the polymerization in gas phase, for instance in a fluidised bed reactor. Processes for polymerization olefins in fluidised bed reactors are disclosed, among others, in EP 173,261 and US 4,543,399.

A fluidised bed reactor typically contains a gas entry zone, above which there is a reaction zone, above which there is a freeboard, or a settling zone. The reaction zone is typically of cylindrical shape, usually with a round cross-sectional area. The freeboard may comprise an upward widening conical section and optionally a cylindrical section having a larger diameter that the reaction zone. However, the freeboard may also be cylindrical having the same diameter as the reaction zone.

In a gas phase fluidised bed reactor the polymer particles are suspended in an upwardly flowing gas stream. The gas enters into the reactor from the bottom. It then passes a perforated metal plate, sometimes called a gas distributor plate or a fluidisation grid, which distributes the gas over the whole cross-sectional area of the reactor. The superficial gas velocity must exceed the minimum fluidisation velocity to fluidise the polymer. The unreacted gas is withdrawn from the top of reactor. The withdrawn gas is then compressed, cooled and reintroduced into the bottom of the reactor. In addition monomer(s) and optionally hydrogen are added into the recycle gas stream to maintain a constant gas composition in the reactor.

In order to improve the temperature control in the reactor it is known to cool the fluidisation gas so that at least a part of it condenses. The condensed gas evaporates when it enters the reactor and thus assists in removing the heat of reaction.

Catalyst and/or polymer from preceding polymerization stages is introduced into the fluidised bed. The height of the bed is maintained at a constant level by withdrawing a mixture of polymer and gas from the reactor. The withdrawal may be done intermittently or, preferably, continuously. A process for continuous withdrawal of polymer is disclosed, among others, in WO-A-00/29452.

### III.e. Polymer recovery

After the polymerization powder withdrawn from the polymerization process is dried and granulated as is known in the art.

The hydrocarbons are typically removed by treating the polymer at an elevated temperature and/or reduced pressure with a gas stream, such as nitrogen stream. The gas stream may also contain components to deactivate the catalyst, such as moisture and oxygen. Typically, the polymer powder may be contacted with a nitrogen stream for a period of about 30 minutes to 3 hours at a temperature of about 40 to 70°C at atmospheric pressure. The nitrogen may contain from 100 ppm to 5% by weight of water vapour.

After the removal of residual hydrocarbons the polymer powder is mixed with desired additives and extruded. The desired additives include antioxidants, process stabilisers, antiblock and slip agents, antistatic agents, catalyst neutralizers, processing aids, nucleating agents and fillers. The extrusion is preferably conducted in a twin screw extruder, either with co-rotating or counter-rotating screws. The extrusion conditions depend on the type of the polymer, additive formulation and the intended use of the polymer.

The temperature may range from 250 to 350°C. The average residence time of the polymer melt in the extruder may be from 10 seconds to 5 minutes, preferably from 30 seconds to 2 minutes, again depending on the polymer and its use.

Mentioned and other characteristics and features of the prepolymerized catalyst, its process for producing and its use in a process for producing a polymer are further illustrated in a non-limiting manner in the following examples. Comparative examples are provided in order to further illustrate the elegance of the present invention.

### Example 1

The silica supported Dimethylsilyl[(2-methyl-(4'-tert.butyl)-4-phenyl-indenyl)(2-isopropyl-(4'-tert.butyl)- 4-phenyl-indenyl)]zirconium dichloride / MAO catalyst is suspended in a mixture of oil and grease so that the final concentration is 2 wt.-%. The mixture (1.1 g catalyst/h) is continuously fed to the prepolymerisation reactor together with 43 kg/h propylene and a hydrogen feed of 0.4 g/h. The reaction pressure is 53 bar, the temperature 40 °C and the residence time is 32 minutes.

The amount of pre-polymerised propylene (prepolymerisation degree) was found to be 290 g PP/g catalyst. The weight average molecular weight of the pre-polymer was 146,000 g/mol.

The pre-polymerised catalyst is then continuously fed to the loop reactor. Simultaneously 107 kg/h propylene is added. The polymerisation temperature in the loop is 65 °C and the pressure is 53,3.10⁵ Pa (53.3 bar). After a residence time of 41 minutes the polymer is withdrawn from the loop reactor.

The operation of the prepolymerisation reactor and the loop reactor was found to be stable and no formation of agglomerates was observed. Furthermore, a later investigation of the reactors revealed that no deposit was formed on the reactor walls.

### Example 2

The process of Example 1 was repeated except that the temperature was 35 °C. The amount of pre-polymerised propylene (pre-polymerisation degree) was found to be 344 g PP/g catalyst. The weight average molecular weight of the pre-polymer was 90,000 g/mol.

The operation of the prepolymerisation reactor and the loop reactor was found to be stable. However, a later investigation of the reactors revealed that substantially no practically relevant amount of deposit had been formed on the wall of the prepolymerisation reactor whereas the wall of the loop reactor was clean.

### Comparative Example 1

The process of Comparative Example 1 was repeated except that the temperature was 25 °C and the hydrogen feed was 1.0 g/h. The propylene feed was adjusted to obtain an average residence time of 11 minutes. The amount of pre-polymerised propylene (prepolymerisation degree) was found to be 10 g PP/g catalyst. The weight average molecular weight of the prepolymer was 15,000 g/mol.

The operation of the prepolymerisation reactor and the loop reactor was not stable and a later investigation of the reactors revealed that deposit had been formed on the walls of both prepolymerisation and loop reactors.

### Comparative Example 2

The process of example 1 was repeated except that the temperature was 40 °C and 150 g/h of ethylene was fed into the prepolymerisation reactor. The process conditions are summarised in table 3. A sample was taken from the prepolymerisation reactor to analyse the prepolymerisation degree, which was 267 g PP/g catalyst, and weight average molecular weight, which was found to be 20,000 g/mol. The polymer was separated after the loop reactor.

The operation of the pre-polymerisation reactor and the loop reactor was found to be not stable and formation of agglomerates was observed. Furthermore, a later investigation of the reactors revealed that deposits were formed on the reactor walls in both reactors.

**Table: Process data**

| Conditions | | Example 1 | Example 2 | Comparative Example 1 | Comparative Example 2 |
|---|---|---|---|---|---|
| Prepolymeriser | | | | | |
| Catalyst feed | [g/h] | 2,8 | 1.0 | 1.0 | 1.5 |
| Hydrogen feed | [g/h] | 0,4 | 0,4 | 1.0 | 0,4 |
| Ethylene feed | [g/h] | 0 | 0 | 0 | 150 |
| Pressure | 10⁵ Pa | 53 | 52 | 53 | 52 |
| Residence time | [min] | 32 | 32 | 11 | 32 |
| Temperature | [°C] | 40 | 35 | 25 | 40 |
| Prepolym. Degree | [g PP/g cat] | 290 | 344 | 10 | 267 |
| M_{W} pre-polymer | [kg/mol] | 146 | 90 | 15 | 20 |
| Loop reactor | | | | | |
| Temperature | [°C] | 70 | 65 | 70 | 65 |
| Pressure | 10⁵ Pa | 53 | 53 | 53 | 54 |
| Residence time | [min] | 42 | 60 | 42 | 60 |
| Propylene feed | [kg/h] | 151 | 147 | 150 | 145 |
| Ethylene feed | [kg/h] | 0 | 0 | 0 | 0 |
| Catalyst activity | [kg PP/g cat] | 8 | 16 | 3,4 | 16 |

These examples show that by producing a prepolymerized catalyst comprising the specific amount of polyolefin per gram catalyst and having a specific weight average molecular weight the advantages of the present invention are obtained.

## Claims

1. Process for producing a polymer of a least one alpha-olefin, comprising a step of prepolymerizing the catalyst with at least one alpha-olefin monomer in a continuously operating reactor at an average residence time of from more than 30 minutes to 90 minutes, at a temperature within the range of from 25 to 70 °C, such that the prepolymerized catalyst comprises 200-400 g polyolefin/g catalyst and the polyolefin present on the catalyst has a weight average molecular weight within the range of from 50,000 g/mol to 150,000 g/mol.

2. Process according to claim, 1 wherein the prepolymerization is carried out at an average residence time from 31-60 minutes, preferably 35-50 minutes.

3. Process according to claim 1 or 2, wherein the prepolymerization is carried out at a temperature of 35-60°C.

4. Process according to any one of claims 1 to 3, wherein the temperature during the prepolymerization increases.

5. Process according to any one of claims 1 to 4, wherein the prepolymerization is carried out in at least two steps and/or in at least two reactors or reactor compartments and the temperature increases in the successive steps and/or reactors or reactor compartments.

6. Process according to any one of claims 1-5, wherein the catalyst is a metallocene catalyst.

7. Process according to any one of claims 1-6, wherein the prepolymerization is a slurry polymerization.

8. Process according to any one of claims 1-7, wherein the polymerization is carried out in a loop reactor.

9. Process according to any one of claims 1-8, wherein the prepolymerization is carried out in liquid monomer in the presence of a process additive such as an antistatic agent.

10. Process according to any one of claims 1-9, wherein the prepolymerization is carried out in the presence of hydrogen.

11. Process according to any one of claims 1-10, wherein reactants, diluent and/or additive are added continuously and/or intermittently.

12. Process according to any one of claims 1-11, wherein the alpha-olefin monomer for the prepolymerization and polymerization is ethylene or propylene and mixtures thereof, preferably propylene.

## Patentansprüche

1. Verfahren zur Herstellung eines Polymers aus mindestens einem Alpha-Olefin umfassend einen Schritt der Präpolymerisierung des Katalysators mit mindestens einem Alpha-Olefin Monomer in einem kontinuierlich in Betrieb befindlichen Reaktor bei einer durchschnittlichen Verweildauer von mehr als 30 Minuten bis 90 Minuten bei einer Temperatur im Bereich von 25 bis 70 °C derart, dass der präpolymerisierte Katalysator 200 bis 400 g Polyolefin/g Katalysator umfasst und das auf dem Katalysator vorhandene Polyolefin ein durchschnittliches Molekulargewicht im Bereich von 50.000 g/mol bis 150.000 g/mol aufweist.

2. Verfahren nach Anspruch 1, wobei die Präpolymerisation bei einer durchschnittlichen Verweildauer von 31-60 Minuten, vorzugsweise 30-50 Minuten, durchgeführt wird.

3. Verfahren nach Anspruch 1 oder 2, wobei die Präpolymerisation bei einer Temperatur von 35-60 °C durchgeführt wird.

4. Verfahren nach einem der Ansprüche 1 bis 3, wobei die Temperatur während der Präpolymerisation ansteigt.

5. Verfahren nach einem der Ansprüche 1 bis 4, wobei die Präpolymerisation in mindestens zwei Schritten und/oder in mindestens zwei Reaktoren oder Reaktorkammern durchgeführt wird und die Temperatur in den aufeinanderfolgenden Schritten und/oder Reaktoren oder Reaktorkammern ansteigt.

6. Verfahren nach einem der Ansprüche 1 bis 5, wobei der Katalysator ein Metallocen-Katalysator ist.

7. Verfahren nach einem der Ansprüche 1 bis 6, wobei die Präpolymerisation eine Aufschlämmungs-Polymerisation ist.

8. Verfahren nach einem der Ansprüche 1 bis 7, wobei die Polymerisation in einem Schlaufenreaktor durchgeführt wird.

9. Verfahren nach einem der Ansprüche 1 bis 8, wobei die Präpolymerisation in flüssigem Monomer in Anwesenheit eines Verfahrenszusatzes, wie beispielsweise einem Antistatikum, durchgeführt wird.

10. Verfahren nach einem der Ansprüche 1 bis 9, wobei die Präpolymerisation in Anwesenheit von Wasserstoff durchgeführt wird.

11. Verfahren nach einem der Ansprüche 1 bis 10, wobei Reaktanten, Verdünnungsmittel und/oder Zusätze kontinuierlich und/oder in Abständen hinzugegeben werden.

12. Verfahren nach einem der Ansprüche 1 bis 11, wobei das Alpha-Olefin Monomer für die Präpolymerisation und Polymerisation Ethylen oder Propylen und Mischungen davon ist, vorzugsweise Propylen.

## Revendications

1. Procédé de production d'un polymère d'au moins une alpha-oléfine, comprenant une étape consistant à prépolymériser le catalyseur avec au moins un monomère d'alpha-oléfine dans un réacteur fonctionnant en continu pendant un temps de séjour moyen de plus de 30 minutes à 90 minutes, à une température comprise dans la plage allant de 25 à 70 °C, de sorte que le catalyseur prépolymérisé comprend de 200 à 400 g de polyoléfine/g de catalyseur et la polyoléfine présente sur le catalyseur a un poids moléculaire moyen en poids compris dans la plage allant de 50 000 g/mol à 150 000 g/mol.

2. Procédé selon la revendication 1, dans lequel la prépolymérisation est réalisée pendant un temps de séjour moyen de 31 à 60 minutes, de préférence de 35 à 50 minutes.

3. Procédé selon la revendication 1 ou 2, dans lequel la prépolymérisation est réalisée à une température de 35 à 60 °C.

4. Procédé selon l'une quelconque des revendications 1 à 3, dans lequel la température pendant la prépolymérisation augmente.

5. Procédé selon l'une quelconque des revendications 1 à 4, dans lequel la prépolymérisation est réalisée en au moins deux étapes et/ou dans au moins deux réacteurs ou compartiments de réacteur et la température augmente dans les étapes successives et/ou les réacteurs ou compartiments de réacteur successifs.

6. Procédé selon l'une quelconque des revendications 1 à 5, dans lequel le catalyseur est un catalyseur de métallocène.

7. Procédé selon l'une quelconque des revendications 1 à 6, dans lequel la prépolymérisation est une polymérisation en suspension.

8. Procédé selon l'une quelconque des revendications 1 à 7, dans lequel la polymérisation est réalisée dans un réacteur en boucle.

9. Procédé selon l'une quelconque des revendications 1 à 8, dans lequel la prépolymérisation est réalisée dans un monomère liquide en présence d'un additif du procédé tel qu'un agent antistatique.

10. Procédé selon l'une quelconque des revendications 1 à 9, dans lequel la prépolymérisation est réalisée en présence d'hydrogène.

11. Procédé selon l'une quelconque des revendications 1 à 10, dans lequel les réactifs, le diluant et/ou l'additif sont ajoutés de manière continue et/ou intermittente.

12. Procédé selon l'une quelconque des revendications 1 à 11, dans lequel le monomère d'alpha-oléfine pour la prépolymérisation et la polymérisation est l'éthylène ou le propylène et des mélanges de ceux-ci, de préférence le propylène.
